# EUROPÄISCHE PATENTSCHRIFT

(11) **EP 3 765 469 B1**
(45) Veröffentlichungstag und Bekanntmachung des Hinweises auf die Patenterteilung: **26.10.2022**
(21) Anmeldenummer: 19703684.1
(22) Anmeldetag: 05.02.2019
(51) Int. Cl.: C07F 7/18, B60C 1/00, C08K 3/36, C08K 5/548, C08K 9/06, C08L 21/00

(54) **SILAN, KAUTSCHUKMISCHUNG ENTHALTEND DAS SILAN UND FAHRZEUGREIFEN, DER DIE KAUTSCHUKMISCHUNG IN WENIGSTENS EINEM BAUTEIL AUFWEIST**
SILANE, RUBBER MIXTURE CONTAINING THE SILANE, AND VEHICLE TIRE HAVING THE RUBBER MIXTURE IN AT LEAST ONE COMPONENT
SILANE, MÉLANGE DE CAOUTCHOUC CONTENANT LE SILANE ET PNEUMATIQUE DE VÉHICULE QUI COMPREND LE MÉLANGE DE CAOUTCHOUC DANS AU MOINS UN ÉLÉMENT

(30) Priorität: 12.03.2018 DE 102018203652
(43) Veröffentlichungstag der Anmeldung: 20.01.2021
(73) Patentinhaber: Continental Reifen Deutschland GmbH, 30165 Hannover (DE)
(72) Erfinder: DAUER, David-Raphael, 30419 Hannover (DE); JACOB, Andreas, 30419 Hannover (DE); STROHMEIER, Julian, 30419 Hannover (DE)
(74) Vertreter: Continental Corporation
(86) Internationale Anmeldenummer: PCT/EP2019/052715
(87) Internationale Veröffentlichungsnummer: WO 2019/174817

(56) Entgegenhaltungen:
- WO-A1-2019/001822
- WO-A1-2019/001823
- JP-A- 2002 201 312

## Beschreibung

Die Erfindung betrifft ein Silan, eine Kautschukmischung enthaltend das Silan und einen Fahrzeugreifen, der die Kautschukmischung in wenigstens einem Bauteil aufweist.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten. Im Stand der Technik bekannte Silane gehen beispielsweise aus der DE 2536674 C3 und der DE 2255577 C3 hervor. Die Kieselsäure wird dabei mittels derartiger Silane an das oder die Polymer(e) angebunden, wodurch die Silane auch als Kupplungsagenzien bezeichnet werden. Durch die Anbindung der Kieselsäure mittels Silan-Kupplungsagenzien ergeben sich Vorteile hinsichtlich des Rollwiderstandsverhaltens und der Prozessierbarkeit der Kautschukmischung. Hierzu weist das Silan üblicherweise wenigstens eine Schwefelgruppierung auf, die an der Vulkanisation der Kautschukmischung beteiligt ist.

Neben den genannten Eigenschaften spielen aber auch weitere Eigenschaften der Kautschukmischung, insbesondere bei der Anwendung im Fahrzeugreifen, eine wichtige Rolle, wie insbesondere die Steifigkeit der Mischung, die sich u. a. auf das Handling-Verhalten des Fahrzeugreifens auswirkt.

In der WO 2015/172915 A1 wird eine Kautschukmischung enthaltend ein harnstoffhaltiges Silan offenbart, die im Vergleich zum Stand der Technik eine höhere Steifigkeit bei nahezu gleichbleibenden Indikatoren für Rollwiderstand und Nassgriff aufweist. Die Harnstoffgruppe ist hierbei im sogenannten Spacer, also der Abstandsgruppe zwischen Silicium (Anbindung an den Füllstoff) und Schwefel (Anbindung an den Dienkautschuk) enthalten.

In der JP 2002-201312 A werden Silane für Kautschukmischungen vorgeschlagen, die eine Harnstoffgruppierung oder ein Säureamid und einen Phenylen-Rest in der Abstandsgruppe aufweisen, wodurch eine verbesserte Dispersion von Ruß oder Kieselsäure als Füllstoffe in der Kautschukmischung erzielt werden könnte.

Der vorliegenden Erfindung liegt die Aufgabe zugrunde, ein neuartiges Silan bereitzustellen und eine Kautschukmischung mit dem Silan bereitzustellen, wodurch im Vergleich zum Stand der Technik eine weitere Verbesserung im Eigenschaftsprofil umfassend die Steifigkeit und damit insbesondere die Handling-Prediktoren der Kautschukmischung, insbesondere für die Anwendung im Fahrzeugreifen, erzielt wird.

Gelöst wird die Aufgabe durch das erfindungsgemäße Silan gemäß Anspruch 1, die mit dem erfindungsgemäßen Silan modifizierte Kieselsäure, die erfindungsgemäße Kautschukmischung enthaltend das Silan sowie den erfindungsgemäßen Fahrzeugreifen, der die erfindungsgemäße Kautschukmischung in wenigstens einem Bauteil aufweist.

Das erfindungsgemäße Silan weist folgende Formel I) auf:

I) (R¹)ₒSi-R²-X-A-Y-[R⁷-Y-]ₘ-R⁷-Sₖ-R⁷-[-Y-R⁷]ₘ-Y-A-X-R²-Si(R¹)ₒ,

wobei o = 3 ist und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
   oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei die Reste R² innerhalb eines Moleküls gleich oder verschieden sein können und lineare oder verzweigte Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen beinhalten; und
wobei die Gruppen X innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist; und
wobei die Gruppen A innerhalb eines Moleküls gleich oder verschieden voneinander sein können und aromatische Gruppen sind, und
wobei die Reste R⁷ innerhalb eines Moleküls gleich oder verschieden sein können und Alkylenreste mit 1 bis 20 Kohlenstoffatomen umfassen, die cyclische, verzweigte und/oder aliphatisch ungesättigte Gruppen aufweisen können; und wobei die Gruppen Y innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist; und wobei jedes m unabhängig voneinander eine ganze Zahl von 0 bis 4 ist, und wobei das Silan auch in Form von Oligomeren vorliegen kann, die durch Hydrolyse und Kondensation von Silanen der Formel I) entstehen.

Im Vergleich zu aus dem Stand der Technik bekannten Silanen weist das erfindungsgemäße Silan mit der Gruppe -R²-X-A-Y-[R⁷-Y-]ₘ-R⁷- eine vergleichsweise lange und partiell rigide Abstandsgruppe auf, die eine aromatische Gruppe A und wenigstens eine Alkylengruppe R⁷ sowie die Verknüpfungseinheiten X und Y umfasst. Hierdurch wird erfindungsgemäß ein neuartiges Silan bereitgestellt. Eine Kautschukmischung, die das erfindungsgemäße Silan enthält, weist ein optimiertes Eigenschaftsprofil umfassend die Steifigkeit auf, welches insbesondere auf die vorhandene aromatische Gruppe A in Kombination mit den Verknüpfungseinheiten X und Y und der Alkylengruppe R⁷ innerhalb einer Abstandsgruppe (d. h. auf jeder Seite der Sₖ-Gruppierung) zurückgeführt werden könnte. Die erfindungsgemäße Kautschukmischung weist somit eine gewisse Verbesserung hinsichtlich des Eigenschaftsprofils umfassend Handling-Prediktoren auf und der erfindungsgemäße Fahrzeugreifen zeigt u. a. ein verbessertes Handling-Verhalten.

Im Folgenden werden das erfindungsgemäße Silan und dessen bevorzugte Ausführungsformen erläutert. Sämtliche Aspekte gelten auch für das Silan in der erfindungsgemäßen Kautschukmischung und im erfindungsgemäßen Fahrzeugreifen.

Die Begriffe "Rest" und "Gruppe" werden im Rahmen der vorliegenden Erfindung im Zusammenhang mit chemischen Formelbestandteilen synonym verwendet.

Wie in Formel I) dargestellt, ist der allgemeine prinzipielle Aufbau des Silans symmetrisch, wobei die Sₖ-Gruppe als Mittelpunkt angesehen wird. Allerdings können einzelne Gruppierungen und Parameter auf beiden Seiten unterschiedlich sein, sodass das Molekül im Speziellen nicht spiegelsymmetrisch sein muss.

Bevorzugt sind die Gruppierungen und Parameter auf beiden Seiten der Sₖ-Gruppe gleich, wodurch eine vergleichsweise einfache Syntheseroute möglich ist.

In der Formel I) können die m auf beiden Seiten jeweils unabhängig voneinander Werte von 0 bis 4 annehmen. Die Gruppierung [R⁷-Y-] kann somit zusätzlich auf jeweils beiden Seiten oder nur auf einer Seite der Schwefelgruppierung Sₖ mit m =1 im Molekül vorhanden sein, womit das Silan auf jeder Seite oder nur auf einer Seite mehr als eine Alkylengruppe R⁷ aufweist oder sich mit m = 2 oder 3 oder 4 auf einer oder beiden Seiten unabhängig voneinander wiederholen, wodurch sich die Zahl der Alkylengruppen R⁷ entsprechend erhöht. Gemäß einer bevorzugten Ausführungsform der Erfindung ist m auf beiden Seiten gleich 0, d .h. bevorzugt ist jedes m = 0. Ein derartiges Molekül ist vergleichsweise einfach herzustellen, wobei das erfindungsgemäße Wesen des Moleküls, nämlich die Kombination der Alkylengruppe R⁷ mit der aromatischen Gruppe A auf jeder Seite und den Verknüpfungen X und Y in der Abstandsgruppe vorhanden ist, sodass hiermit bereits eine optimierte Steifigkeit in der Kautschukmischung erzielt werden kann.

Die Gruppen X können wie zu Formel I) ausgeführt innerhalb eines Moleküls gleich oder verschieden voneinander sein und sind ausgewählt aus den Gruppen -HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist.

Die Gruppen -HNC(=O)- und -C(=O)NH- sind Carbonsäureamidgruppen, wobei die beiden unterschiedlichen Schreibweisen die möglichen Konnektivitäten innerhalb des Moleküls zum Ausdruck bringen sollen. Es ist somit denkbar, dass das Stickstoffatom der Gruppe X in der Ausführung Säureamid an der aromatischen Gruppe A anknüpft oder an dem Rest R².

Die Gruppen -C(=O)O- und -OC(=O)- sind Estergruppen, wobei auch hier mit den beiden Schreibweisen analog zu den Säureamidgruppen die unterschiedlichen Konnektivitäten hinsichtlich A und R² gemeint sind.

Die Gruppen -OC(=O)NH- und -HNC(=O)O- sind Urethangruppen, wobei auch hier mit den beiden Schreibweisen analog zu den Säureamidgruppen die unterschiedlichen Konnektivitäten hinsichtlich A und R² gemeint sind.

Die Gruppe -R³NC(=O)NR³- stellt eine Harnstoffgruppe dar, wobei wenigstens einer der Reste R³ ein Wasserstoffatom ist.

Die Gruppe -R³NC(=NR³)NR³- stellt eine Guanidingruppe dar, wobei wenigstens einer der Reste R³ ein Wasserstoffatom ist.

Die Gruppe -R³NC(=S)NR³- stellt eine Thioharnstoffgruppe dar, wobei wenigstens einer der Reste R³ ein Wasserstoffatom ist.

Bevorzugt ist jedes der R³ einer jeden Gruppe X ein Wasserstoffatom.

Für den Fall, dass R³ ein organischer Rest ist wie für R² definiert, ist es besonders bevorzugt, wenn R³ ausgewählt ist aus Alkylresten mit 1 bis 7 Kohlenstoffatomen oder aromatischen Resten mit 6 bis 10 Kohlenstoffatomen, wie z. B. einem Phenylrest. Bevorzugt ist es, dass die Gruppen X ausgewählt sind aus den Gruppen -HNC(=O)-, - C(=O)NH-, -OC(=O)NH-, -HNC(=O)O-, -R³NC(=O)NR³-, -R³NC(=NR³)NR³-, - R³NC(=S)NR³-, und zwar mit der oben genannten Bedingung für R³.

Besonders bevorzugt sind die Gruppen X ausgewählt aus den Gruppen -HNC(=O)-, - C(=O)NH-, -OC(=O)NH-, -HNC(=O)O-, -R³NC(=O)NR³-, wiederum bevorzugt aus den Gruppen -HNC(=O)-, -C(=O)NH-, -R³NC(=O)NR³-.

Gemäß einer besonders vorteilhaften Ausführungsform der Erfindung ist X auf beiden Seiten des Moleküls gleich und eine Harnstoffgruppe -HNC(=O)NH- mit jedem R³ = Wasserstoffatom.

Die Gruppen Y können wie zu Formel I) ausgeführt innerhalb eines Moleküls gleich oder verschieden voneinander sein und sind ausgewählt aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist.

Für die jeweiligen Gruppen gelten die obigen Ausführungen zu X.

Auch jedes R⁴ ist bevorzugt in den jeweiligen Gruppen ein Wasserstoffatom. Für den Fall, dass R⁴ ein organischer Rest ist wie für R² definiert, ist es besonders bevorzugt, wenn R⁴ ausgewählt ist aus Alkylresten mit 1 bis 7 Kohlenstoffatomen oder aromatischen Resten mit 6 bis 10 Kohlenstoffatomen, wie z. B. einem Phenylrest.

Bevorzugt ist es, dass die Gruppen Y ausgewählt sind aus den Gruppen -HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-, und zwar mit der oben genannten Bedingung für R⁴. Besonders bevorzugt sind die Gruppen Y ausgewählt aus den Gruppen -HNC(=O)-, -C(=O)NH-, -OC(=O)NH-, -HNC(=O)O-, -R⁴NC(=O)NR⁴-, wiederum bevorzugt aus den Gruppen -HNC(=O)-, -C(=O)NH-, -R³NC(=O)NR³-.

Gemäß einer besonders vorteilhaften Ausführungsform der Erfindung ist Y auf beiden Seiten des Moleküls gleich und eine Säureamidgruppe -HNC(=O)- oder -C(=O)NH-. Bevorzugt ist hierbei eine Konnektivität, die am einfachen Beispiel mit m = 0 folgendermaßen aussieht:

(R¹)ₒSi-R²-X-A-HN-C(=O)-R⁷-Sₖ-.

Das Stickstoffatom der Säureamidgruppe ist somit gemäß dieser bevorzugten Ausführungsform auf beiden Seiten des Moleküls an die aromatische Gruppe A angebunden, die X und Y verknüpft. Diese bevorzugte Ausführung ist nicht auf m = 0 beschränkt, sondern gilt für alle Kombinationen der beiden m mit Werten von 0 bis 4.

Die Reste R⁷ können innerhalb eines Moleküls gleich oder verschieden sein und umfassen Alkylenreste mit 1 bis 20 Kohlenstoffatomen, die cyclische, verzweigte und/oder aliphatisch ungesättigte Gruppen aufweisen können.

Es ist bevorzugt, dass die Reste R⁷ lineare oder verzweigte Alkylenreste mit 1 bis 20 Kohlenstoffatomen, bevorzugt 1 bis 10 Kohlenstoffatomen, besonders bevorzugt 2 bis 6 Kohlenstoffatomen, oder Cycloalkylgruppen mit 4 bis 8 Kohlenstoffatomen sind.

Gemäß einer besonders bevorzugten Ausführungsform der Erfindung sind die Reste R⁷ auf beiden Seiten des Moleküls, insbesondere wenn m = 0 ist, Alkylengruppen mit 2 bis 4 Kohlenstoffatomen, besonders bevorzugt mit 2 Kohlenstoffatomen, also insbesondere Ethylengruppen (-CH₂-CH₂-).

Die Gruppen A verbinden X und Y, wobei X und Y somit formal jeweils auch Substituenten der jeweiligen aromatischen Gruppe A sind.

Bei den aromatischen Gruppen A kann es sich prinzipiell um jede aromatische Gruppe handeln, wobei die A innerhalb eines Moleküls gleich oder verschieden zueinander sein können. Die aromatischen Gruppen A können hierbei Heteroatome enthalten und/oder an einem oder mehreren Atomen des aromatischen Gerüstes Substituenten (für ein jeweiliges Wasserstoffatom) tragen, und zwar zusätzlich zu den formelgemäßen Substituenten X und Y.

Bevorzugt ist es, dass die aromatischen Gruppen A ausgewählt sind aus der Gruppe bestehend aus Phenylen-, Naphthylen-, Pyridyl-, Pyridazyl-, Pyrimidyl-, Pyrazyl-, Triazyl-, Chinolyl-, Pyrrolyl-, Furanyl-, Thiophenyl-, Pyrazolyl-, Imidazolyl-, Thiazolyl- und Oxazolyl-Resten sowie Derivaten der genannten Gruppen.

Die Verknüpfung der genannten Gruppen an der jeweiligen aromatischen Gruppe kann dabei über alle denkbaren Atome des aromatischen Gerüsts erfolgen. Bei einem monocyclischen Aromaten mit sechs Gerüstatomen wie einem Phenylenrest heißt das z. B., dass die Gruppen in para-, meta- oder ortho- Position zueinander angeordnet sein können. Gemäß einer besonders vorteilhaften Ausführungsform der Erfindung sind die Gruppen A auf beiden Seiten des Moleküls Phenylen-Reste.

Gemäß einer bevorzugten Ausführungsform der Erfindung sind X und Y in para-Stellung zueinander an der jeweiligen aromatischen Gruppe A angeordnet.

Hierdurch ergibt sich eine längliche und rigide Molekülstruktur des Silans, die insbesondere in einer Kautschukmischung zu einer weiteren Erhöhung von deren Steifigkeit beitragen kann.

Gemäß einer weiteren bevorzugten Ausführungsform der Erfindung sind X und Y in ortho-Stellung zueinander an der jeweiligen aromatischen Gruppe A angeordnet.

Hierdurch ergibt sich eine partiell rigide Molekülstruktur des Silans, die insbesondere in einer Kautschukmischung zu einer Verbesserung von deren Eigenschaften beitragen kann.

Die Reste R¹ des erfindungsgemäßen Silans können innerhalb der Silylgruppen (R¹)ₒSi- und auf beiden Seiten des Moleküls gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder

Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen,
oder es können zwei oder mehr Silane gemäß Formel I) über Reste R¹ verbrückt sein.

Sämtliche genannten Reste R¹ und Verknüpfungen können innerhalb einer Silyl-Gruppe miteinander kombiniert sein.

Für den Fall, dass zwei Silane gemäß Formel I) miteinander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.

Das erfindungsgemäße Silan kann auch Oligomere umfassen, die durch Hydrolyse und Kondensation der Silane der Formel I) entstehen. Dabei sind zum einen Oligomere von zweien oder mehreren Silanen gemäß Formel I) umfasst. Erfindungsgemäß sind zum anderen auch Oligomere umfasst, die durch Kondensation wenigstens eines Silans gemäß Formel I) mit wenigstens einem weiteren Silan, welches nicht Formel I) entspricht, entstehen. Bei dem "weiteren Silan" kann es sich insbesondere um dem Fachmann bekannte Silan-Kupplungsagenzien handeln.

Das Silan gemäß Formel I) umfasst bevorzugt in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliciumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o = 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Die Reste R² des erfindungsgemäßen Silans können innerhalb eines Moleküls gleich oder verschieden voneinander sein und sind lineare oder verzweigte Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen.

Es ist bevorzugt, dass die Reste R² lineare oder verzweigte Alkylengruppen mit 2 bis 8 Kohlenstoffatomen oder Cycloalkylgruppen mit 4 bis 8 Kohlenstoffatomen, wie insbesondere Cyclohexylreste, sind.

Gemäß einer besonders vorteilhaften Ausführungsform der Erfindung sind alle Reste R² innerhalb eines Moleküls gleich und Alkylenreste mit 2 bis 6 Kohlenstoffatomen, bevorzugt 2 bis 4 Kohlenstoffatomen, insbesondere bevorzugt 2 oder 3 Kohlenstoffatome, wobei Propylenreste mit 3 Kohlenstoffatomen ganz besonders bevorzugt sind.

Die Gruppierung Sₖ stellt eine Sulfidbrücke aus k Schwefelatomen dar, wobei die k Schwefelatome aneinandergereiht sind, sodass das Molekül eine polysulfidische Gruppierung aufweist. Der Index k ist dabei eine ganze Zahl größer oder gleich 2. Bevorzugt ist k eine ganze Zahl von 2 bis 10 (einschließlich 2 und 10), besonders bevorzugt 2 bis 8, ganz besonders bevorzugt 2, 3 oder 4.

Wie dem Fachmann bekannt, lässt sich eine synthesebedingt erhaltene Disulfidgruppierung in einem weiteren Verfahrensschritt unter Zugabe von elementaren Schwefel durch Aufschwefelung in Polysulfide überführen, wodurch k größer oder gleich 3 erhalten wird, siehe hierzu Wang et al., Journal of Sulfur Chemistry, 2013, 34, 55-66.

Prinzipiell kann die Aufschwefelung auch zu einem früheren Verfahrensstadium vorgenommen werden, wie insbesondere bei den Ausgangsmolekülen bei der Synthese, sodass das Molekül gemäß Formel I) als Polysulfid mit k größer oder gleich 3 synthetisiert sein kann.

Gemäß einer besonders vorteilhaften Ausführungsform der Erfindung ist k gleich 2, sodass das Molekül eine disulfidische Gruppierung aufweist.

In einer besonders bevorzugten und beispielhaften Ausführungsform der Erfindung weist das erfindungsgemäße Silan die folgende Formel II) auf:

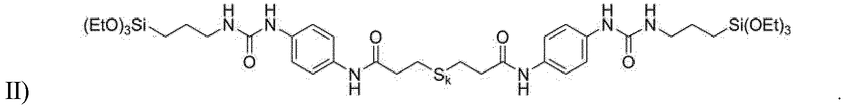

Hierbei sind im Hinblick auf Formel I) m = 0, alle R¹ Ethoxygruppen, beide R² Propylenreste, beide X Harnstoffgruppen, beide A Phenylenreste, wobei alle Verknüpfungen in para-Stellung angeordnet sind sowie jedes Y eine Säureamidgruppe, dessen Stickstoffatom an den jeweiligen Phenylenrest zur Harnstoffgruppe (X) angeknüpft ist, und die Reste R⁷ (auf beiden Seiten zwischen Y und Sₖ) Ethylengruppen.

Das Silan gemäß Formel II) stellt ein bevorzugtes erfindungsgemäßes Beispiel dar. Hiermit wird ein besonders gutes Eigenschaftsprofil umfassend die Steifigkeit der erfindungsgemäßen Kautschukmischung erzielt. Letztere weist somit verbesserte Eigenschaften im Hinblick auf die Handling-Indikatoren auf.

Besonders bevorzugt ist k hierbei gleich 2, wodurch sich die genannten Vorteile in besonderem Maße ergeben.

Ein beispielhaftes und bevorzugtes Silan mit k = 2 ist in Formel III) dargestellt:

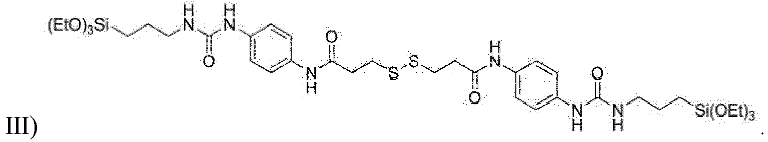

Die erfindungsgemäße Kautschukmischung enthält wenigstens ein erfindungsgemäßes Silan. Es ist prinzipiell denkbar, dass die Kautschukmischung mehrere erfindungsgemäße Silane unterschiedlicher Ausführungsformen, also mit ggf. unterschiedlichen Gruppen X, Y, A, R⁷ sowie R¹, R², ggf. R³, unterschiedlichen Verknüpfungen an den aromatischen Gruppen A, sowie mit unterschiedlichen Werten k und/oder m im Gemisch enthält. Insbesondere kann die Kautschukmischung auch ein Gemisch zweier oder mehrerer Silane I), II) oder III) enthalten. Die Kautschukmischung kann das erfindungsgemäße Silan gemäß den gezeigten Formeln I) bis III) auch in Kombination mit anderen im Stand der Technik bekannten Silanen enthalten, ggf. als Oligomere, wie oben beschrieben.

Solche aus dem Stand der Technik bekannten Kupplungsagenzien sind insbesondere und beispielsweise bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Im Stand der Technik bekannt ist auch ein Silan-Gemisch, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem

Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Gemäß einer besonders vorteilhaften Ausführungsform der Erfindung enthält die Kautschukmischung das Silan gemäß Formel III).

Bei der erfindungsgemäßen Kautschukmischung handelt es sich bevorzugt um eine Kautschukmischung, die für den Einsatz in Fahrzeugreifen geeignet ist und hierzu bevorzugt wenigstens einen Dienkautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Die erfindungsgemäße Kautschukmischung enthält als Füllstoff bevorzugt wenigstens eine Kieselsäure, wodurch die Vorteile des erfindungsgemäßen Silans besonders hervortreten. Die Begriffe "Kieselsäure" und "Silika" werden im Rahmen der vorliegenden Erfindung synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 100 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 95 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay).

Die Menge der wenigstens einen Kieselsäure beträgt dabei bevorzugt 5 bis 300 phr, besonders bevorzugt 10 bis 200 phr, ganz besonders bevorzugt 20 bis 180 phr. Im Falle unterschiedlicher Kieselsäuren ist mit den angegebenen Mengen die Gesamtmenge an enthaltenen Kieselsäuren gemeint.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Mw größer als 20.000 g/mol) und dadurch festen Kautschuke bezogen.

Die in dieser Schrift verwendete Angabe phf (parts per hundred parts of filler by weight) ist die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bevorzugt enthält die erfindungsgemäße Kautschukmischung wenigstens ein Silan der Formel I), bevorzugt wenigstens das Silan gemäß Formel II) und/oder Formel III) in einer Menge von 1 bis 25 phr und im bevorzugten Fall mit Kieselsäure als Füllstoff bevorzugt 2 bis 20 phr.

Das oder die erfindungsgemäßen Silane werden bei der Herstellung der erfindungsgemäßen Kautschukmischung bevorzugt in wenigstens einer Grundmischstufe zugegeben, die bevorzugt wenigstens einen Dienkautschuk und bevorzugt wenigstens eine Kieselsäure als Füllstoff enthält.

Ein weiterer Gegenstand der vorliegenden Erfindung ist somit ein Verfahren zur Herstellung der erfindungsgemäßen Kautschukmischung, wobei wenigstens ein erfindungsgemäßes Silan wie vorstehend beschrieben bevorzugt in wenigstens einer Grundmischstufe zugegeben wird.

Gemäß einer vorteilhaften Ausführungsform der Erfindung wird das wenigstens eine erfindungsgemäße Silan zuvor auf Kieselsäure aufgezogen und in dieser Form in die Kautschukmischung eingemischt.

Bei dem erfindungsgemäßen Verfahren zur Herstellung der erfindungsgemäßen Kautschukmischung ist es somit bevorzugt, wenn das wenigstens eine erfindungsgemäße Silan zuvor auf Kieselsäure aufgezogen und in dieser Form in die Kautschukmischung eingemischt wird.

Ein weiterer Gegenstand der vorliegenden Erfindung ist eine Kieselsäure, die mit wenigstens einem erfindungsgemäßen Silan zumindest an deren Oberfläche modifiziert ist. Beispielsweise erfolgt die Modifizierung durch wenigstens folgende Verfahrensschritte:
a) Lösen des erfindungsgemäßen Silans in einem organischen Lösungsmittel;
b) Inkontaktbringen wenigstens einer Kieselsäure mit der Lösung aus Schritt a) und anschließendes Rühren der entstandenen Suspension, bevorzugt für 30 Minuten bis 18 Stunden;
c) Trocknen der erhaltenen modifizierten Kieselsäure.

Die Kautschukgrundmischung enthaltend wenigstens ein erfindungsgemäßes Silan und/oder eine erfindungsgemäße Kieselsäure wird anschließend durch Zugabe von Vulkanisationschemikalien, s. unten insbesondere ein Schwefelvulkanisationssystem, zu einer Kautschukfertigmischung verarbeitet und im Anschluss vulkanisiert, wodurch ein erfindungsgemäßes Vulkanisat der erfindungsgemäßen Kautschukmischung erhalten wird.

Die erfindungsgemäße Kautschukmischung kann Ruß als weiteren Füllstoff enthalten, und zwar bevorzugt in Mengen von 2 bis 200 phr, besonders bevorzugt 2 bis 70 phr.

Die erfindungsgemäße Kautschukmischung kann, bevorzugt möglichst geringe Mengen d.h. bevorzugt 0 bis 3 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, wobei Mineralöle als Weichmacher besonders bevorzugt sind.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die inneren Bauteile eines Reifen, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.

Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Ein weiterer Gegenstand der vorliegenden Erfindung ist ein Fahrzeugreifen, der die erfindungsgemäße Kautschukmischung enthaltend wenigstens ein erfindungsgemäßes Silan in wenigstens einem Bauteil aufweist.

Der vulkanisierte Fahrzeugreifen weist wenigstens in einem Bauteil ein Vulkanisat wenigstens einer erfindungsgemäßen Kautschukmischung auf. Dem Fachmann ist bekannt, dass die meisten Substanzen, wie z. B. die enthaltenen Kautschuke und Silane, insbesondere das erfindungsgemäße Silan, entweder bereits nach dem Mischen oder erst nach der Vulkanisation in chemisch veränderter Form vorliegen.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt weist der erfindungsgemäße Fahrzeugreifen die erfindungsgemäße Kautschukmischung wenigstens im Laufstreifen auf.

Bevorzugt weist der erfindungsgemäße Fahrzeugreifen die erfindungsgemäße Kautschukmischung wenigstens in der Seitenwand auf.

Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden soll die Erfindung anhand von Ausführungsbeispielen näher erläutert werden.

Das Silan gemäß Formel III) als erfindungsgemäßes Beispiel wurde auf folgende Weise hergestellt:

### 1. Herstellung von 1-(4'-Aminophenyl)-3-(3 "-(triethoxysilyl)propyl)-harnstoff nach dem Syntheseschema gemäß Formel IV)

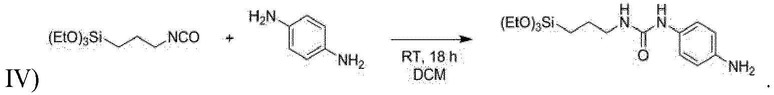

Zu einer Lösung von *para*-Phenylendiamin (10.00 g, 92.5 mmol, 2.0 Äq.) in Dichlormethan (300 mL DCM) wurde bei Raumtemperatur tropfenweise 3-(Isocyanatopropyl)-triethoxysilan (11.44 mL, 11.44 g, 46.2 mmol, 1.0 Äq.) gegeben. Nach Rühren über Nacht wurde das Lösungsmittel am Rotationsverdampfer entfernt und es konnte ein grauer Feststoff (21.57 g) als Rohprodukt erhalten werden.

Die säulenchromatographische Aufreinigung erfolgte in mehreren kleinen Portionen zu je ca. 3 - 4 g (jeweils ca. 74 Gew.-% Ausbeute) an Kieselgel (DCM/EtOH 9:1).

Nach dem Trocknen am Hochvakuum konnte die Zielverbindung in Form eines leicht grauen Feststoffes (extrapoliert für gesamtes Produkt: 15.96 g, 44.9 mmol, 97% bezogen auf Silan) isoliert werden.

¹H NMR (*engl.* "nuclear magnetic resonance") (500 MHz, DMSO-*d₆*) δ 7.82 (s, 1H), 6.98 (d, *J* = 8.7 Hz, 2H), 6.45 (d, *J* = 8.7 Hz, 2H), 5.91 (t, *J* = 5.8 Hz, 1H), 4.66 (s, 2H), 3.74 (q, *J* = 7.0 Hz, 6H), 3.00 (q, *J* = 6.8 Hz, 2H), 1.48 - 1.39 (m, 2H), 1.14 (t, *J* = 7.0 Hz, 9H), 0.57 - 0.49 (m, 2H).

¹³C NMR (126 MHz, DMSO-*d₆*) δ 155.69, 143.33, 129.62, 120.22, 114.12, 57.70, 41.81, 23.49, 18.24, 7.25.

### 2. Herstellung von 3,3'-Dithiopropionsäurechlorid (in situ) nach dem Syntheseschema gemäß Formel V)

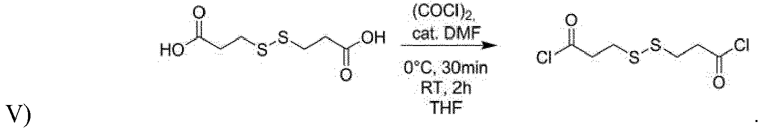

Zu einer Suspension von 3,3'-Dithiopropionsäure (0.80 g, 3.8 mmol, 1.0 Äq.) in Tetrahydrofuran (20 mL THF) wurde Dimethylformamid (0.1 mL DMF, 1.3 mmol) gegeben. Bei 0 °C wurde Oxalylchlorid (1.1 mL, 1.65 g, 13.0 mmol, 10.0 Äq.) tropfenweise zu der Reaktionsmischung gegeben und für 30 min bei der Temperatur gerührt. Anschließend wurde die entstandene gelbe Lösung für weitere 2 h bei RT gerührt. Danach wurden das Lösungsmittel und überschüssiges Oxalylchlorid abdestilliert. Es konnte ein gelber Feststoff isoliert werden, der ohne weitere Analytik oder Aufreinigung (aufgrund der Reaktivität) für den nächsten Syntheseschritt verwendet wurde.

### 3. Herstellung des Silans gemäß Formel III) nach dem Syntheseschema gemäß Formel VI)

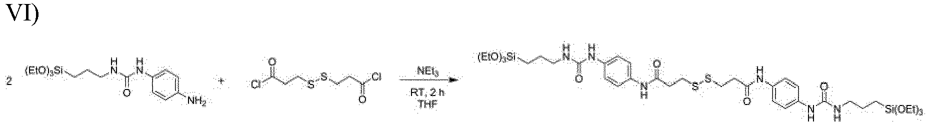

Zu einer Lösung von 1-(4'-Aminophenyl)-3-(3"-(triethoxysilyl)propyl)-harnstoff (2.97 g, 8.4 mmol, 2.2 Äq.) und Triethylamin (2.6 mL, 1.92 g, 19.0 mmol, 5.0 Äq.) in THF (10 mL) wurde bei RT eine Lösung von 3,3'-Dithiopropionsäurechlorid (0.94 g, 3.8 mmol, 1.0 Äq.) in THF (30 mL) über einen Zeitraum von 15 min. getropft. Die entstandene weiße Suspension wurde für 1 h bei RT gerührt und danach abfiltriert. Das Filtrat wurde eingeengt un der erneut ausgefallene Feststoff erneut abfiltriert. Der Filterkuchen wurde mit kaltem THF (2 x 10 mL) und dem. Wasser (4 x 50 mL) gewaschen. Nach Trocknen im Hochvakuum konnte die Zielverbindung in Form eines hellbraunen Pulvers (1.76 g, 2.0 mmol, 52 %) isoliert werden.

Zersetzungstemperatur: 244 °C.

¹H NMR (500 MHz, DMSO-*d₆*) δ 9.87 (s, 2H), 8.31 (s, 2H), 7.42 (d, *J* = 9.0 Hz, 4H), 7.28 (d, *J* = 8.9 Hz, 4H), 6.12 (t, *J* = 5.7 Hz, 2H), 3.74 (q, *J* = 7.0 Hz, 12H), 3.02 (dt, *J* = 20.7, 6.8 Hz, 8H), 2.69 (t, *J* = 7.1 Hz, 4H), 1.39 - 1.51 (m, 4H), 1.14 (t, *J* = 7.0 Hz, 18H), 0.49 - 0.58 (m, 4H).

¹³C NMR (126 MHz, DMSO-*d₆*) δ 168.53, 155.27, 136.12, 132.74, 119.74, 117.94, 57.75, 41.79, 35.90, 33.66, 23.42, 18.28, 7.28.

²⁹Si NMR (99 MHz, DMSO-*d₆*) δ 44.56.

ESI-MS (*engl.* "electrospray ionization mass spectrometry") *m*/*z* (%):
839.33 [M+H-EtOH]⁺ (100), 885.37 [M+H]⁺ (13), 907.36 [M+Na]⁺ (75).

Das hergestellte Silan gemäß Formel III) wird in eine erfindungsgemäße Kautschukmischung enthaltend wenigstens einen Dienkautschuk und wenigstens eine Kieselsäure als Füllstoff eingemischt. Bevorzugt wird das Silan gemäß Formel III) hierzu zuvor auf eine Kieselsäure aufgezogen und anschließend in dieser Form der Kautschukmischung zugegeben.

Das Aufziehen auf Kieselsäure erfolgt z. B. folgendermaßen:
Zu einer Suspension von Kieselsäure, z. B. granulierter Kieselsäure, in DMF wird bei Raumtemperatur eine Lösung des Silans gemäß Formel III) in dem gewünschten Verhältnis Kieselsäure / Silan gelöst in DMF gegeben. Beispielsweise werden 31,2 g Kieselsäure (VN3, Firma Evonik) und 4,17 g des Silans gemäß Formel III) verwendet. Die entstehende Suspension wird beispielsweise über Nacht bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure ggf. je nach gewünschter Feinheit mittels Mörser zerkleinert. Anschließend wird beispielsweise einen weiteren Tag bei 40 °C am Hochvakuum getrocknet.

Die erfindungsgemäße Kautschukmischung wird beispielsweise in Form eines vorgeformten Laufstreifens eines Fahrzeugreifens (wie oben beschrieben) auf einen Reifenrohling aufgebracht und anschließend mit diesem vulkanisiert.

## Patentansprüche

1. Silan gemäß Formel I):
I) (R¹)ₒSi-R²-X-A-Y-[R⁷-Y-]ₘ-R⁷-Sₖ-R⁷-[-Y-R⁷]ₘ-Y-A-X-R²-Si(R¹)ₒ
wobei o = 3 ist und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei die Reste R² innerhalb eines Moleküls gleich oder verschieden sein können und lineare oder verzweigte Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen sind; und
wobei die Gruppen X innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist; und
wobei die Gruppen A innerhalb eines Moleküls gleich oder verschieden voneinander sein können und aromatische Gruppen sind, und
wobei die Reste R⁷ innerhalb eines Moleküls gleich oder verschieden sein können und Alkylenreste mit 1 bis 20 Kohlenstoffatomen umfassen, die cyclische, verzweigte und/oder aliphatisch ungesättigte Gruppen aufweisen können; und wobei die Gruppen Y innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist; und wobei jedes m unabhängig voneinander eine ganze Zahl von 0 bis 4 ist, und wobei das Silan auch in Form von Oligomeren vorliegen kann, die durch Hydrolyse und Kondensation von zweien oder mehreren Silanen entstehen oder wenigstens einem Silan gemäß Formel I) mit wenigstens einem weiteren Silan, welches nicht Formel I) entspricht, entstehen, wobei es sich bei dem weiteren Silan insbesondere um Silan-Kupplungsagenzien handelt.

2. Silan nach Anspruch 1, **dadurch gekennzeichnet, dass** jedes m = 0 ist.

3. Silan nach einem der vorherigen Ansprüche, **dadurch gekennzeichnet, dass** die Gruppen X ausgewählt sind aus den Gruppen -HNC(=O)-, -C(=O)NH-, -OC(=O)NH-, -HNC(=O)O-, -R³NC(=O)NR³-, -R³NC(=NR³)NR³-, -R³NC(=S)NR³-.

4. Silan nach einem der vorherigen Ansprüche, **dadurch gekennzeichnet, dass** die Gruppen Y ausgewählt sind aus den Gruppen -HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-.

5. Silan nach einem der vorherigen Ansprüche, **dadurch gekennzeichnet, dass** die Reste R⁷ lineare oder verzweigte Alkylenreste mit 1 bis 20 Kohlenstoffatomen, bevorzugt 1 bis 10 Kohlenstoffatomen, besonders bevorzugt 2 bis 6 Kohlenstoffatomen, oder Cycloalkylgruppen mit 4 bis 8 Kohlenstoffatomen sind.

6. Silan nach einem der vorherigen Ansprüche, **dadurch gekennzeichnet, dass** die aromatischen Gruppen A ausgewählt sind aus der Gruppe bestehend aus Phenylen-, Naphthylen-, Pyridyl-, Pyridazyl-, Pyrimidyl-, Pyrazyl-, Triazyl-, Chinolyl-, Pyrrolyl-, Furanyl-, Thiophenyl-, Pyrazolyl-, Imidazolyl-, Thiazolyl- und Oxazolyl-Resten sowie Derivaten der genannten Gruppen.

7. Silan nach einem der vorherigen Ansprüche **dadurch gekennzeichnet, dass** die Reste R¹ Alkylgruppen mit 1 bis 6 Kohlenstoffatomen oder Alkoxygruppen mit 1 bis 6 Kohlenstoffatomen oder Halogenide sind.

8. Silan nach einem der vorherigen Ansprüche, **dadurch gekennzeichnet, dass** die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, sind, wobei o = 3 ist.

9. Silan nach einem der vorherigen Ansprüche **dadurch gekennzeichnet, dass** die Reste R² lineare oder verzweigte Alkylengruppen mit 2 bis 8 Kohlenstoffatomen oder Cycloalkylgruppen mit 4 bis 8 Kohlenstoffatomen sind.

10. Silan nach Anspruch 1, **dadurch gekennzeichnet, dass** es die folgende Formel II) aufweist:

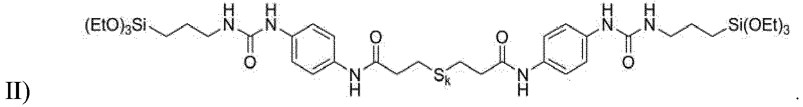

11. Silan nach einem der vorherigen Ansprüche, wobei k eine ganze Zahl von 2 bis 8 ist.

12. Kieselsäure, die mit wenigstens einem Silan nach einem der Ansprüche 1 bis 11 zumindest an deren Oberfläche modifiziert ist.

13. Kautschukmischung enthaltend wenigstens ein Silan nach einem der Ansprüche 1 bis 11 und/oder wenigstens eine Kieselsäure nach Anspruch 12.

14. Fahrzeugreifen, der die Kautschukmischung nach Anspruch 13 in wenigstens einem Bauteil aufweist.

## Claims

1. Silane of formula I):
I) (R¹)ₒSi-R²-X-A-Y-[R⁷-Y-]ₘ-R⁷-Sₖ-R⁷-[-Y-R⁷]ₘ-Y-A-X-R²-Si(R¹)ₒ
wherein o = 3 and k is an integer greater than or equal to 2 and the radicals R¹ within the silyl groups (R¹)ₒSi- and on both sides of the molecule may be identical or different from each other and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or
alkyl polyether groups -O-(R⁶-O)ᵣ-R⁵ wherein R⁶ are identical or different and are branched or unbranched, saturated or unsaturated, aliphatic, aromatic or mixed aliphatic/aromatic bridging C1-C30 hydrocarbon groups, preferably -CH2-CH2-, r is an integer of from 1 to 30, preferably 3 to 10, and R⁵ are unsubstituted or substituted, branched or unbranched, terminal alkyl, alkenyl, aryl or aralkyl groups, preferably -C₁₃H₂₇ alkyl group,
or
two R¹ form a cyclic dialkoxy group having 2 to 10 carbon atoms, or two or more silanes of formula I) can be bridged via radicals R¹; and
wherein the radicals R² within a molecule may be identical or different and are linear or branched alkylene groups having 1 to 20 carbon atoms or cycloalkyl groups having 4 to 12 carbon atoms or aryl groups having 6 to 20 carbon atoms or alkenyl groups having 2 to 20 carbon atoms, alkynyl groups having 2 to 20 carbon atoms or aralkyl groups having 7 to 20 carbon atoms; and
wherein the groups X within a molecule may be identical or different from each other and are selected from the groups -HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, wherein the radicals R³ within a group X and within a molecule may be identical or different and are selected from a hydrogen atom or as defined for R² under the condition that at least one R³ within each group X is a hydrogen atom; and
wherein the groups A within a molecule may be identical or different from each other and are aromatic groups, and
wherein the radicals R⁷ within a molecule may be identical or different and comprise alkylene radicals having 1 to 20 carbon atoms, which may have cyclic, branched and/or aliphatically unsaturated groups; and
wherein the groups Y within a molecule may be identical or different from each other and are selected from the groups -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wherein the radicals R4 within a group Y and within a molecule may be identical or different and are selected from a hydrogen atom or as defined for R² under the condition that at least one R⁴ within each group Y is a hydrogen atom; and wherein each m is independently an integer of from 0 to 4, and wherein the silane may also be in the form of oligomers that are formed by hydrolysis and condensation of two or more silanes or of at least one silane of formula I) with at least one further silane that does not correspond to formula I), the further silane being in particular silane coupling agents.

2. Silane according to Claim 1, **characterized in that** each m = 0.

3. Silane according to either of the preceding claims, **characterized in that** the groups X are selected from the groups -HNC(=O)-, -C(=O)NH-, -OC(=O)NH-, -HNC(=O)O-, -R³NC(=O)NR³-, -R³NC(=NR³)NR³-, -R³NC(=S)NR³-.

4. Silane according to any of the preceding claims, **characterized in that** the groups Y are selected from the groups -HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-.

5. Silane according to any of the preceding claims, **characterized in that** the radicals R⁷ are linear or branched alkylene radicals having 1 to 20 carbon atoms, preferably 1 to 10 carbon atoms, particularly preferably 2 to 6 carbon atoms, or cycloalkyl groups having 4 to 8 carbon atoms.

6. Silane according to any of the preceding claims, **characterized in that** the aromatic groups A are selected from the group consisting of phenylene, naphthylene, pyridyl, pyridazyl, pyrimidyl, pyrazyl, triazyl, quinolyl, pyrrolyl, furanyl, thiophenyl, pyrazolyl, imidazolyl, thiazolyl and oxazolyl radicals and also derivatives of said groups.

7. Silane according to any of the preceding claims, **characterized in that** the radicals R¹ are alkyl groups having 1 to 6 carbon atoms or alkoxy groups having 1 to 6 carbon atoms or halides.

8. Silane according to any of the preceding claims, **characterized in that** the radicals R¹ within a silyl group (R¹)ₒSi- are identical and are alkoxy groups having 1 or 2 carbon atoms, that is to say are methoxy groups or ethoxy groups, very particularly preferably ethoxy groups, wherein o = 3.

9. Silane according to any of the preceding claims, **characterized in that** the radicals R² are linear or branched alkylene groups having 2 to 8 carbon atoms or cycloalkyl groups having 4 to 8 carbon atoms.

10. Silane according to Claim 1, **characterized in that** it has the following formula II):

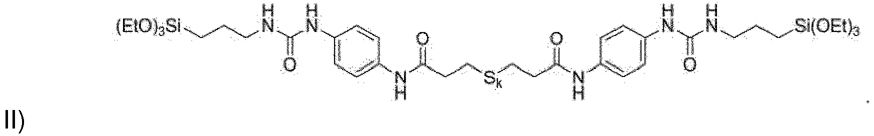

11. Silane according to any of the preceding claims, wherein k is an integer of from 2 to 8.

12. Silica which has been modified at least on its surface with at least one silane according to any of Claims 1 to 11.

13. Rubber mixture comprising at least one silane according to any of Claims 1 to 11 and/or at least one silica according to Claim 12.

14. Vehicle tyre comprising the rubber mixture according to Claim 11 in at least one component.

## Revendications

1. Silane de formule I) :
I) (R¹)ₒSi-R²-X-A-Y-[R⁷-Y-]ₘ-R⁷-Sₖ-R⁷-[-Y-R⁷]ₘ-Y-A-X-R²-Si(R¹)ₒ
o = 3 et k étant un nombre entier supérieur ou égal à 2 et les radicaux R¹ à l'intérieur des groupes silyle (R¹)ₒSi- et sur les deux côtés de la molécule pouvant être identiques ou différents les uns des autres et étant choisis parmi des groupes alcoxy comportant 1 à 10 atomes de carbone, des groupes cycloalcoxy comportant 4 à 10 atomes de carbone, des groupes phénoxy comportant 6 à 20 atomes de carbone, des groupes aryle comportant 6 à 20 atomes de carbone, des groupes alkyle comportant 1 à 10 atomes de carbone, des groupes alcényle comportant 2 à 20 atomes de carbone, des groupes alcynyle comportant 2 à 20 atomes de carbone, des groupes aralkyle comportant 7 à 20 atomes de carbone, des halogénures ou
des groupes alkylpolyéther -O-(R⁶-O)ᵣ-R⁵, R⁶ étant identiques ou différents et étant des groupes hydrocarbonés pontants en C₁₋₃₀ ramifiés ou non ramifiés, saturés ou insaturés, aliphatiques, aromatiques ou mixtes aliphatiques/aromatiques, de préférence -CH₂-CH₂-, r étant un nombre entier de 1 à 30, de préférence de 3 à 10, et R⁵ étant des groupes terminaux alkyle, alcényle, aryle ou aralkyle non substitués ou substitués, ramifiés ou non ramifiés, de préférence un groupe alkyle -C₁₃H₂₇,
ou
deux R¹ formant un groupe dialcoxy cyclique comportant 2 à 10 atomes de carbone,
ou deux silanes ou plus de formule I) pouvant être pontés par le biais de radicaux R¹ ; et
les radicaux R² à l'intérieur d'une molécule pouvant être identiques ou différents et étant des groupes alkylène linéaires ou ramifiés, comportant 1 à 20 atomes de carbone, des groupes cycloalkyle comportant 4 à 12 atomes de carbone, des groupes aryle comportant 6 à 20 atomes de carbone, des groupes alcényle comportant 2 à 20 atomes de carbone, des groupes alcynyle comportant 2 à 20 atomes de carbone ou des groupes aralkyle comportant 7 à 20 atomes de carbone ; et
les groupes X à l'intérieur d'une molécule pouvant être identiques ou différents et étant choisis parmi les groupes -HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, les radicaux R³ à l'intérieur du groupe X et d'une molécule pouvant être identiques ou différents et étant choisis parmi un atome d'hydrogène ou définis comme pour R² à la condition qu'au moins un R³ à l'intérieur de chaque groupe X soit un atome d'hydrogène ; et
les groupes A à l'intérieur d'une molécule pouvant être identiques ou différents les uns des autres et étant des groupes aromatiques, et les radicaux R⁷ à l'intérieur d'une molécule pouvant être identiques ou différents et comprenant des radicaux alkylène comportant 1 à 20 atomes de carbone, qui peuvent présenter des groupes cycliques, ramifiés et/ou aliphatiques insaturés ; et
les groupes Y à l'intérieur d'une molécule pouvant être identiques ou différents les uns des autres et étant choisis parmi les groupes -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, les radicaux R⁴ à l'intérieur d'un groupe Y et d'une molécule pouvant être identiques ou différents et étant choisis parmi un atome d'hydrogène ou définis comme pour R² à la condition qu'au moins un R⁴ à l'intérieur de chaque groupe Y soit un atome d'hydrogène, et chaque m étant indépendamment l'un de l'autre un nombre entier de 0 à 4,
et le silane pouvant également être présent sous forme d'oligomères, qui sont générés par hydrolyse et condensation de deux silanes ou plus ou sont générés par condensation d'au moins un silane de formule I) avec au moins un autre silane, qui ne correspond pas à la formule I), l'autre silane étant en particulier des agents de couplage de silane.

2. Silane selon la revendication 1, **caractérisé en ce que** m = 0.

3. Silane selon l'une quelconque des revendications précédentes, **caractérisé en ce que** le groupe X est choisi parmi les groupes -HNC(=O)-, -C(=O)NH-, -OC(=O)NH-, -HNC(=O)O-, -R³NC(=O)NR³-, -R³NC(=NR³)NR³-, -R³NC(=S)NR³-.

4. Silane selon l'une quelconque des revendications précédentes, **caractérisé en ce que** le groupe Y est choisi parmi les groupes -HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-.

5. Silane selon l'une quelconque des revendications précédentes, **caractérisé en ce que** les radicaux R⁷ sont des radicaux alkylène linéaires ou ramifiés comportant 1 à 20 atomes de carbone, préférablement 1 à 10 atomes de carbone, particulièrement préférablement 2 à 6 atomes de carbone, ou des groupes cycloalkyle comportant 4 à 8 atomes de carbone.

6. Silane selon l'une quelconque des revendications précédentes, **caractérisé en ce que** les groupes aromatiques A sont choisis dans le groupe constitué par des radicaux phénylène, naphtylène, pyridinyle, pyridazyle, pyrimidinyle, pyrazyle, triazyle, quinoléinyle, pyrrolyle, furannyle, thiophényle, pyrazolyle, imidazolyle, thiazolyle et oxazolyle ainsi que des dérivés des groupes mentionnés.

7. Silane selon l'une quelconque des revendications précédentes, **caractérisé en ce que** les radicaux R¹ sont des groupes alkyle comportant 1 à 6 atomes de carbone ou des groupes alcoxy comportant 1 à 6 atomes de carbone ou des halogénures.

8. Silane selon l'une quelconque des revendications précédentes, **caractérisé en ce que** les radicaux R¹ à l'intérieur d'un groupe silyle (R¹)ₒSi- sont identiques et sont des groupes alcoxy comportant 1 ou 2 atomes de carbone, en l'occurrence des groupes méthoxy ou des groupes éthoxy, tout particulièrement préférablement des groupes éthoxy, o = 3.

9. Silane selon l'une quelconque des revendications précédentes, **caractérisé en ce que** les radicaux R² sont des groupes alkylène linéaires ou ramifiés comportant 2 à 8 atomes de carbone ou des groupes cycloalkyle comportant 4 à 8 atomes de carbone.

10. Silane selon la revendication 1, **caractérisé en ce qu'il** présente la formule suivante II) :

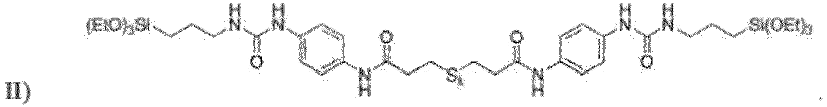

11. Silane selon l'une quelconque des revendications précédentes, k étant un nombre entier de 2 à 8.

12. Acide silicique, qui est modifié au moins au niveau de sa surface par au moins un silane selon l'une quelconque des revendications 1 à 11.

13. Mélange de caoutchouc contenant au moins un silane selon l'une quelconque des revendications 1 à 11 et/ou au moins un acide silicique selon la revendication 12.

14. Pneumatique de véhicule qui présente le mélange de caoutchouc selon la revendication 13 dans au moins un composant.
